# EUROPEAN PATENT SPECIFICATION

(11) **EP 3 466 602 B1**
(45) Date of publication and mention of the grant of the patent: **26.06.2024**
(21) Application number: 18192703.9
(22) Date of filing: 05.09.2018
(51) Int. Cl.: B23K 26/34, B23K 26/144, B23K 26/00, B23K 35/30, B23K 26/08, B23K 26/30, B23K 26/342, B23K 35/02, C22C 19/05, C22C 19/07, B23K 101/00

(54) **METHOD FOR FORMING AN ARTICLE**
VERFAHREN ZUR HERSTELLUNG EINES ARTIKELS
PROCÉDÉ DE FORMATION D'UN ARTICLE

(30) Priority: 25.09.2017 US 201715713857
(43) Date of publication of application: 10.04.2019
(73) Proprietor: General Electric Technology GmbH, 5400 Baden (CH)
(72) Inventor: HULLENDER, Robert Trent, Greenville, SC 29615 (US); WOOLRIDGE, Jillian Jamison, Greenville, SC 29615 (US)
(74) Representative: Novagraaf Group

(56) References cited:
- EP-A1- 3 115 147
- WO-A1-01/51772
- US-A- 5 160 822
- US-A1- 2006 049 153
- US-A1- 2012 267 347
- US-A1- 2015 048 058
- US-A1- 2015 202 717
- US-A1- 2015 224 607
- US-A1- 2017 182 562
- US-B1- 6 872 912

## Description

### FIELD OF THE INVENTION

The present invention is directed to methods for forming articles, methods for forming turbine buckets, and turbine buckets. More particularly, the present invention is directed to methods for forming articles and methods for forming turbine buckets including laser welding a powder of a hard-to-weld alloy to form a cladding layer, and turbine buckets including a squealer tip having a cladding layer of a hard-to-weld alloy.

### BACKGROUND OF THE INVENTION

Hard-to-weld (HTW) alloys, due to their gamma prime and various geometric constraints, are susceptible to gamma prime strain aging, liquation and hot cracking. These materials are also difficult to join when the gamma prime phase is present in volume fractions greater than about 30%, which may occur when aluminum or titanium content exceeds about 3%. As used herein, an "HTW alloy" is an alloy which exhibits liquation, hot and strain-age cracking, and which is therefore impractical to weld in a repeatable manner without significant rework.

HTW alloys may be incorporated into various components of gas turbine engines such as airfoils, blades (buckets), nozzles (vanes), shrouds, combustors, rotating turbine components, wheels, seals, and other hot gas path components. Incorporation of these HTW alloys may be desirable due to often superior operational properties, particularly for certain components subjected to the most extreme conditions and stresses. Additionally, certain HTW alloys may impart advantageous oxidation and corrosion properties when applied as cladding layers to other alloys, such as cladding layers applied to turbine buckets to form squealer tips.

Application of HTW alloys as cladding layer presents significant challenges, particularly because certain HTW alloys tend to form undesirable cracks when a weld bead of such an alloy is applied to a surface in contact with a previously applied weld bead of the alloy. Such challenges inhibit the formation of continuous cladding layers by standard techniques, such as build-up by concentric weld beads, and further inhibit the formation of layers of the HTW alloys more than a single weld bead in thickness. A method of forming a squealer tip on a turbine bucket according to the preamble of claim 1 is disclosed in US 2015/224607 A1. Further methods of forming a squealer tip on a turbine bucket are disclosed in US 2015/048058 A1, US 2015/202717 A1 and WO 01/51772 A1.

### BRIEF DESCRIPTION OF THE INVENTION

A method according to the present invention is defined in claim 1.

Further preferred embodiments are defined in the dependent claims.

Other features and advantages of the present invention will be apparent from the following more detailed description of the preferred embodiment, taken in conjunction with the accompanying drawings, which illustrate, by way of example, the principles of the invention as defined by the appended claims.

### BRIEF DESCRIPTION OF THE DRAWINGS

FIG. 1 is a perspective view of the formation of an article during formation of a cladding layer, according to an embodiment of the present disclosure.
FIG. 2 is a perspective view of the article of FIG. 1 following formation of the cladding layer, according to an embodiment of the present disclosure.
FIG. 3 is a perspective view of the formation of the article of FIGS. 1 and 2 during application of a second sub-layer of a plurality of sub-layers of the cladding layer, according to an embodiment of the present disclosure.
FIG. 4 is a plan schematic view of the weld path of the formation of the cladding layer of FIG. 1, according to an embodiment of the present disclosure.
FIG. 5 is a perspective view of an article having a cladding layer following an alternative weld path to FIGS. 1-4, according to an embodiment of the present disclosure.
FIG. 6 is a plan schematic view of the alternative weld path of FIG. 5, according to an embodiment of the present disclosure.
FIG. 7 is a cross-sectional view of the article formed in FIG. 2 wherein the substrate includes a surface layer of surface material, according to an embodiment of the present disclosure.
FIG. 8 is a cross-sectional view of the article formed in FIG. 2 wherein the surface of the substrate has the same composition as the substrate itself, according to an embodiment of the present disclosure.

Wherever possible, the same reference numbers will be used throughout the drawings to represent the same parts.

### DETAILED DESCRIPTION OF THE INVENTION

Provided are exemplary methods for forming article, methods for forming turbine buckets, and turbine buckets. Embodiments of the present disclosure, in comparison to articles and methods not utilizing one or more features disclosed herein, decrease costs, increase process control, increase process efficiency, increase process speed, increase repeatability, increase cladding layer thickness ranges, decrease squealer tip composition complexity, decrease or eliminate crack occurrence, or combinations thereof.

As used herein, "GTD 111" refers to an alloy including a composition, by weight, of about 13.5% to about 14.5% chromium, about 9% to about 10% cobalt, about 3.3% to about 4.3% tungsten, about 4.4% to about 5.4% titanium, about 2.5% to about 3.5% aluminum, about 0.05% to about 0.15% iron, about 2.3% to about 3.3% tantalum, about 1.1% to about 2.1% molybdenum, about 0.05% to about 0.15% carbon, and a balance of nickel. GTD 111 is available from General Electric Company, 1 River Road, Schenectady, NY 12345.

As used herein, "GTD 222" refers to an alloy including a composition, by weight, of about 22.5% to about 24.5% chromium, about 18% to about 20% cobalt, about 1.5% to about 2.5% tungsten, about 0.3% to about 1.3% niobium, about 1.8% to about 2.8% titanium, about 0.7% to about 1.7% aluminum, about 0.5% to about 1.5% tantalum, about 0.15% to about 0.35% silicon, about 0.05% to about 0.15% manganese, and a balance of nickel. GTD 222 is available from General Electric Company, 1 River Road, Schenectady, NY 12345.

As used herein, "HAYNES 214" refers to an alloy including a composition, by weight, of about 15% to about 17% chromium, about 4% to about 5% aluminum, about 2% to about 4% iron, about 0.002% to about 0.04% yttrium, up to about 0.5% manganese, up to about 0.2% silicon, up to about 0.1% zirconium, up to about 0.05% carbon, up to about 0.5% tungsten, up to about 2% cobalt, up to about 0.15% niobium, up to about 0.5% titanium, up to about 0.5% molybdenum, up to about 0.01% boron, and a balance of nickel. HAYNES 214 is available from H.C. Starck, 45 Industrial Place, Newton, Massachusetts 02461-1951.

As used herein, "HAYNES 230" refers to an alloy including a composition, by weight, of about 21% to about 23% chromium, about 13% to about 15% tungsten, about 1% to about 3% molybdenum, about 0.25% to about 0.75% manganese, about 0.2% to about 0.6% silicon, about 0.1% to about 0.5% aluminum, about 0.05% to about 0.15% carbon, about 0.01% to about 0.03% lanthanum, up to about 3% iron, up to about 5% cobalt, up to about 0.5% niobium, up to about 0.1% titanium, up to about 0.015% boron, and a balance of nickel. HAYNES 230 is available from Haynes International, 1020 W. Park Avenue, Kokomo, Indiana, 46904-9013.

As used herein, "INCONEL 625" refers to an alloy including a composition, by weight, of about 20% to about 23% chromium, about 8% to about 10% molybdenum, about 3.15% to about 4.15% niobium and tantalum, up to about 5% iron, up to about 0.1% carbon, up to about 0.5% manganese, up to about 0.5% silicon, up to about 0.015% phosphorous, up to about 0.015% sulfur, up to about 0.4% aluminum, up to about 0.4% titanium, up to about 1% cobalt, and a balance of nickel. INCONEL 625 is available from Special Metals Corporation, 3200 Riverside Drive, Huntington, West Virginia 25720.

As used herein, "INCONEL 718" refers to an alloy including a composition, by weight, of about 17% to about 21% chromium, about 50% to about 55% nickel and cobalt, about 4.75% to about 5.5% niobium and tantalum, about 2.8% to about 3.3% molybdenum, about 0.65% to about 1.15% titanium, about 0.2% to about 0.8% aluminum, up to about 1% cobalt, up to about 0.08% carbon, up to about 0.35% manganese, up to about 0.35% silicon, up to about 0.015% phosphorous, up to about 0.015% sulfur, up to about 0.006% boron, up to about 0.3% copper, and a balance of iron. INCONEL 718 is available from Special Metals Corporation, 3200 Riverside Drive, Huntington, West Virginia 25720.

As used herein, "MAR-M-247" refers to an alloy including a composition, by weight, of about 5.4% to about 5.7% aluminum, about 8% to about 8.5% chromium, about 9% to about 9.5% cobalt, about 9.3% to about 9.7% tungsten, about 0.05% to about 0.15% manganese, about 0.15% to about 0.35% silicon, about 0.06% to about 0.09% carbon, and a balance of nickel. MAR-M-247 is available from MetalTek International, 905 E. St. Paul Avenue, Waukesha, Wisconsin 53188.

As used herein, "MERL 72" refers to an alloy including a composition, by weight, of about 14% to about 16% nickel, about 19% to about 21% chromium, about 8% to about 10% tungsten, about 4.0% to about 4.8% aluminum, about 0.1% to about 0.3% titanium, about 2% to about 4% tantalum, about 0.25% to about 0.45% carbon, about 0.5% to about 1.5% hafnium, about 0.35% to about 0.55% yttrium, and a balance of cobalt. MERL 72 is available from Polymet Corporation, 7397 Union Centre Boulevard, West Chester, Ohio, 45014.

As used herein, "René 108" refers to an alloy including a composition, by weight, of about 7.9% to about 8.9% chromium, about 9% to about 10% cobalt, about 5% to about 6% aluminum, about 0.5% to about 0.9% titanium, about 9% to about 10% tungsten, about 0.3% to about 0.7% molybdenum, about 2.5% to about 3.5% tantalum, about 1% to about 2% hafnium and a balance of nickel. René 108 is commercially available under that designation.

As used herein, "René N4" refers to an alloy including a composition, by weight, of about 9% to about 10.5% chromium, about 7% to about 8% cobalt, about 3.7% to about 4.7% aluminum, about 3% to about 4% titanium, about 1% to about 2% molybdenum, about 5% to about 7% tungsten, about 4.3% to about 5.3% tantalum, about 0.3% to about 0.7% niobium, about 0.1% to about 0.2% hafnium, and a balance of nickel. René N4 is commercially available under that designation.

As used herein, "René N5" refers to an alloy including a composition, by weight, of about 7% to about 8% cobalt, about 6% to about 8% chromium, about 5.5% to about 7.5% tantalum, about 5.2% to about 7.2% aluminum, about 4% to about 6% tungsten, about 2.5% to about 3.5% rhenium, about 1% to about 2% molybdenum, about 0.1% to about 0.2% hafnium, and a balance of nickel. René N5 is commercially available under that designation.

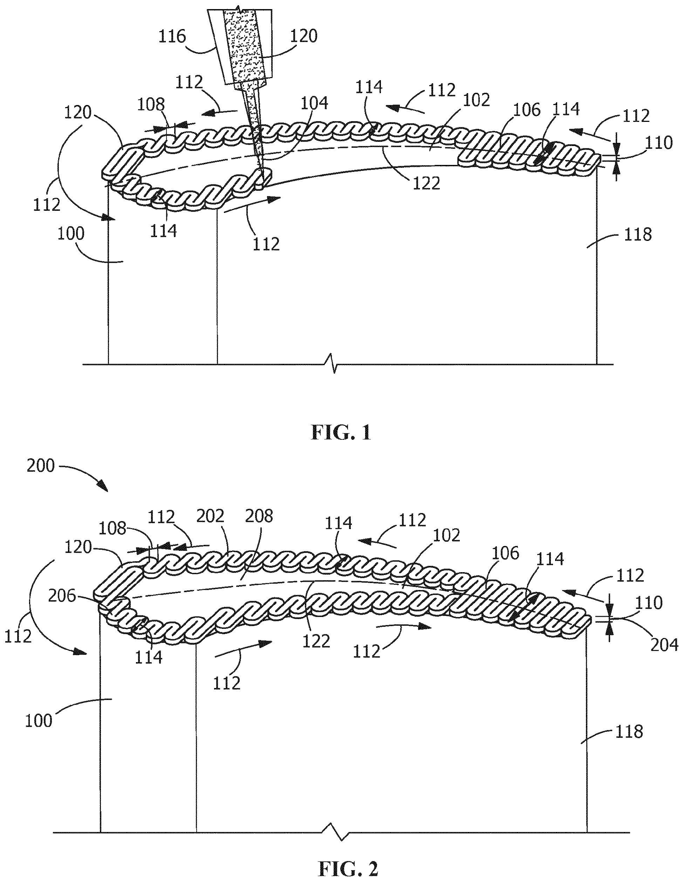

Referring to FIGS. 1-6, in one embodiment, a method for forming an article 200 includes laser welding a powder 104 of a metal alloy 120 to a surface 102 of a substrate 100 along a weld path 400, forming a weld bead 106 of the metal alloy 120 having a weld bead width 108 and a weld bead height 110. The weld path 400 propagates along a weld direction 112, forming a cladding layer 202 of the metal alloy 120 disposed on the surface 102 having a cladding layer thickness 204. The weld path 400 oscillates essentially nonparallel relative to a reference line 122, establishing a cladding width 114 wider than the weld bead width 108. The weld bead 106 contacts itself along each oscillation such that the cladding layer 202 is continuous. The cladding layer 202 is essentially free of cracks. In a further embodiment, forming the cladding layer 202 is free of gas tungsten arc welding.

The reference line 122 is selected from the group consisting of the weld direction 112, a chord line of the substrate 100, a center line of the substrate 100, or combinations thereof.

As used herein, the weld path 400 oscillating "essentially nonparallel" relative to the reference line 122 indicates that between each turn of the weld path 400, the weld path 400 progresses at an angle which is not parallel with respect to the reference line 122, excepting that in embodiments in which the reference line 122 progresses around a curve, there may a point along the curve at which the weld path 400 between two turns of the weld path 400 is parallel with the reference line 122. As used herein "not parallel" indicates an angle between 1° to 179°, alternatively between about 30° to about 150°, alternatively between about 60° to about 120°.

In one embodiment, the weld path 400 oscillates essentially perpendicular to the reference line 122. As used herein, "essentially perpendicular" indicates that that between each turn of the weld path 400, the weld path 400 progresses at an angle at less than about a 15° variance, alternatively less than about a 10° variance, alternatively less than about a 5° variance, excepting that in embodiments in which the weld direction 112 progresses around a curve, the essentially perpendicular oscillation of the weld path 400 may be oblique or even perpendicular to the weld direction 112 at points along the curve.

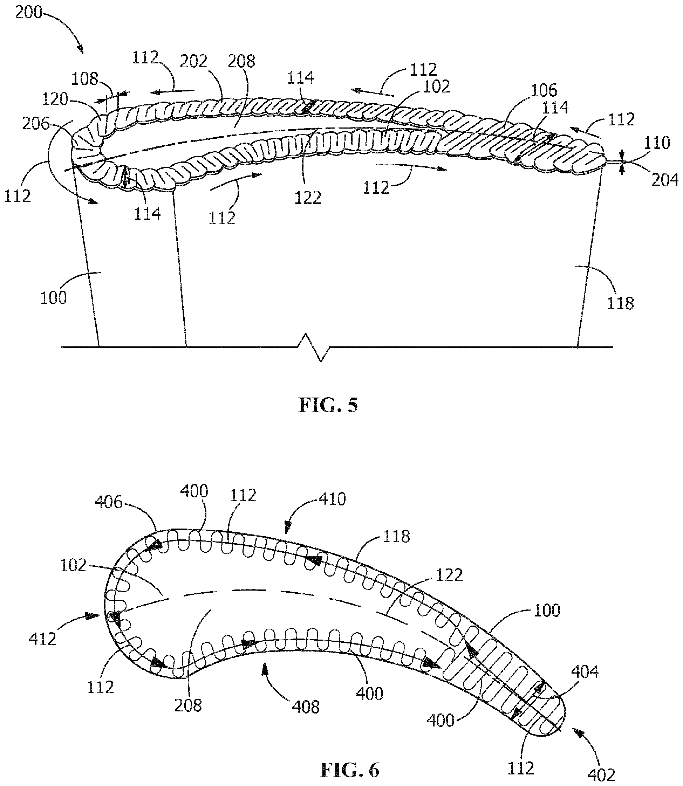

In one embodiment (FIGS. 1-4), the alignment of the oscillating weld path 400 between each turn of the weld path 400 is essentially constant, varying by less than about 15° at each oscillation, alternatively less than about 10°, alternatively less than about 5°, alternatively less than about 1°. In another embodiment (FIGS. 5 and 6), the alignment of the oscillating weld path 400 between each turn of the weld path 400 is maintained essentially perpendicular to the weld direction 112 at that point.

As used herein, the cladding layer 202 being "continuous" indicates that there are no gaps between the oscillations of the weld bead 106 along the weld path 400, but allows that the weld path 400 may be deliberately arranged to establish omitted regions 208 free of the cladding layer 202.

As used herein, "essentially" free of cracks indicates that any cracks are less than about 0.8mm (0.03 inches) in largest dimension, alternatively less than about 0.5mm (0.02 inches) in largest dimension, alternatively less than about 0.3mm (0.01 inches) in largest dimension.

The powder 104 may be applied at any suitable flow rate, including, but not limited to, at a flow rate between about 3 g/min to about 9 g/min, alternatively between about 4 g/min to about 8 g/min, alternatively between about 3 g/min to about 5 g/min, alternatively between about 4 g/min to about 6 g/min, alternatively between about 5 g/min to about 7 g/min, alternatively between about 6 g/min to about 8 g/min, alternatively between about 4.8 g/min to about 5.2 g/min. The flow rate is related to the capture rate of powder 104. The more powder 104 which is captured by the laser welding, the lower the flow rate of the powder 104 may be. Conversely, the lower the rate of capture of the powder 104, the higher the flow rate of the powder 104 should be to compensate.

In one embodiment, the powder 104 is deposited (captured to form the weld bead 106) at a capture rate of between about 40 g/in³ to about 265 g/in³, alternatively between about 44 g/in³ to about 244 g/in³, alternatively between about 60 g/in³ to about 200 g/in³, alternatively between about 65 g/in³ to about 175 g/in³, alternatively between about 70 g/in³ to about 150 g/in³, alternatively between about 75 g/in³ to about 137 g/in³, alternatively between about 40 g/in³ to about 90 g/in³, alternatively between about 65 g/in³ to about 115 g/in³, alternatively between about 90 g/in³ to about 140 g/in³, alternatively between about 115 g/in³ to about 165 g/in³, alternatively between about 140 g/in³ to about 190 g/in³, alternatively between about 165 g/in³ to about 215 g/in³, alternatively between about 190 g/in³ to about 240 g/in³, alternatively between about 215 g/in³ to about 265 g/in³.

In one embodiment, the metal alloy 120 is an HTW alloy. Suitable HTW alloys include, but are not limited to, HAYNES 214. In one embodiment, the metal alloy 120 includes HAYNES 214. In a further embodiment the metal alloy 120 consists essentially of HAYNES 214. As used herein, "consists essentially of" indicates that the inclusion of impurities, the presence of oxidation contaminants, and variances in composition are permissible so long as the properties of the alloy relevant to the alloy's performance in the article, including, but not limited to, melting temperature, oxidation resistance, ductility, and strength, are not negatively and materially affected. In yet a further embodiment, the alloy consists of HAYNES 214.

The laser welding may be performed with any suitable laser welding apparatus 116. According to the invention, the laser welding includes the laser welding apparatus 116 imparting a laser energy density of at least about 11 kJ/cm². In a further embodiment the laser energy density is between about 11.5 kJ/cm² to about 20.3 kJ/cm², alternatively between about 15 kJ/cm² to about 20.3 kJ/cm². The laser welding apparatus 116 may emit any suitable beam diameter, including, but not limited to, a beam diameter of between about 0.25mm (0.01 inches) to about 5mm (0.2 inches), alternatively between about 0.5mm (0.02 inches) to about 3mm (0.1 inches), alternatively between about 0.8mm (0.03 inches) to about 2mm (0.08 inches), alternatively between about 1mm (0.04 inches) to about 2mm (0.07 inches), alternatively between about 1.0mm (0.04 inches) to about 1.5mm (0.06 inches), alternatively between about 1.1mm (0.045 inches) to about 1.7mm (0.065 inches), alternatively between about 1.3mm (0.05 inches) to about 18mm (0.7 inches), alternatively about 1.8mm (0.05 inches), alternatively about 14mm (0.55 inches), alternatively about 1.5mm (0.06 inches). The energy distribution of the laser welding apparatus 116 may include any suitable profile, including, but not limited to, top hat and gaussian. In one embodiment (shown), the laser welding apparatus 116 emits a laser which is about coaxial with the powder 104 as the laser and powder 104 are directed toward the surface 102. In another embodiment (not shown), the laser welding apparatus 116 emits a laser which is off-axis with the powder 104 as the laser and powder 104 are directed toward the surface 102

Laser welding the powder 104 of the metal alloy 120 to the surface 102 of the substrate along the weld path 400 includes a welding speed between about 130 to 500 mm per minute (5 ipm to about 20 ipm), alternatively between about 130 to 300 mm per minute (5 ipm to about 15 ipm), alternatively between about 190 to 450 mm per minute (7.5 ipm to about 17.5 ipm), alternatively between about 250 to 500 mm per minute (10 ipm to about 20 ipm), alternatively between about 130 to 250 mm per minute (5 ipm to about 10 ipm), alternatively between about 190 to 320 mm per minute (7.5 ipm to about 12.5 ipm), alternatively between about 250 to 300 mm per minute (10 ipm to about 15 ipm), alternatively between about 320 to 450 mm per minute (12.5 ipm to about 17.5 ipm), alternatively between about 300 to 500 mm per minute (15 ipm to about 20 ipm).

According to the invention, the substrate 100 is a turbine bucket 118, the article 200 is a turbine bucket 118 including a squealer tip 206, and the cladding layer 202 forms at least a portion of the squealer tip 206. Other examples not covered by the present invention include, but are not limited to, wherein the substrate 100 is a turbine bucket 118 and the cladding layer 202 forms at least a portion of an angel wing, wherein the substrate 100 is a turbine bucket 118 and the cladding layer 202 forms at least a portion of the trailing edge 402, wherein the substrate 100 is a turbine nozzle and the cladding layer 202 forms at least a portion of a nozzle edge, and wherein the substrate 100 includes a narrow or sharp feature subject to higher oxidation than the remainder of the substrate 100 and the cladding layer 202 forms the extremity of the narrow or sharp feature.

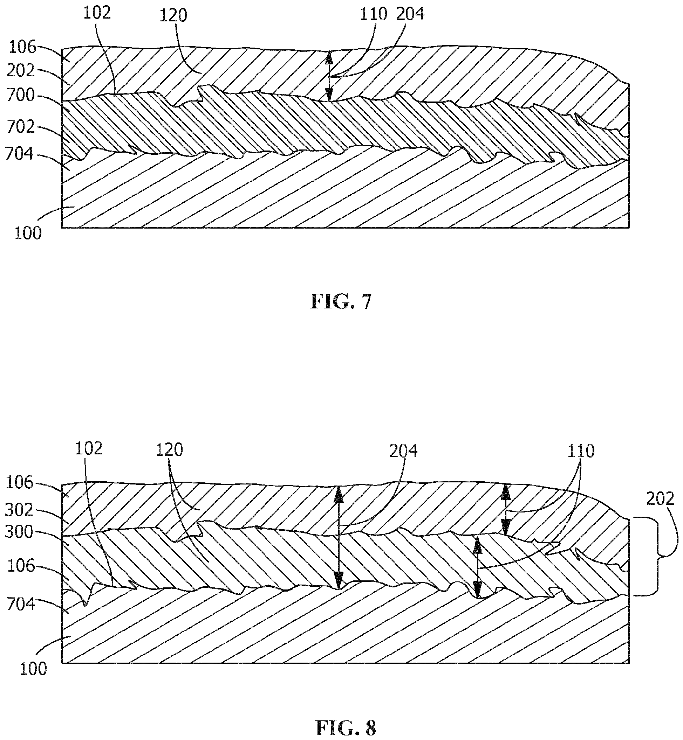

Referring to FIGS. 7 and 8, in one embodiment (FIG. 7), the surface 102 of the substrate 100 includes a surface layer 700 of a surface material 702 compositionally distinct from a material composition 704 of the substrate 100. The surface material may include any suitable alloy composition, including, but not limited to HAYNES 230, INCONEL 625, MERL 72, or combinations thereof. In another embodiment (FIG. 8), the surface 102 of the substrate 100 consists essentially of, alternatively consists of, the material composition 704 of the substrate 100, and the powder 104 of the metal alloy 120 is welded directly to the surface 102 of the substrate 100.

The material composition 704 of the substrate 100 may include any suitable composition, including, but not limited to, steels, mild steels, superalloys, nickel-based superalloys, cobalt-based superalloys, GTD 111, GTD 222, INCONEL 718, MAR-M-247, René N4, René N5, René 108, or combinations thereof.

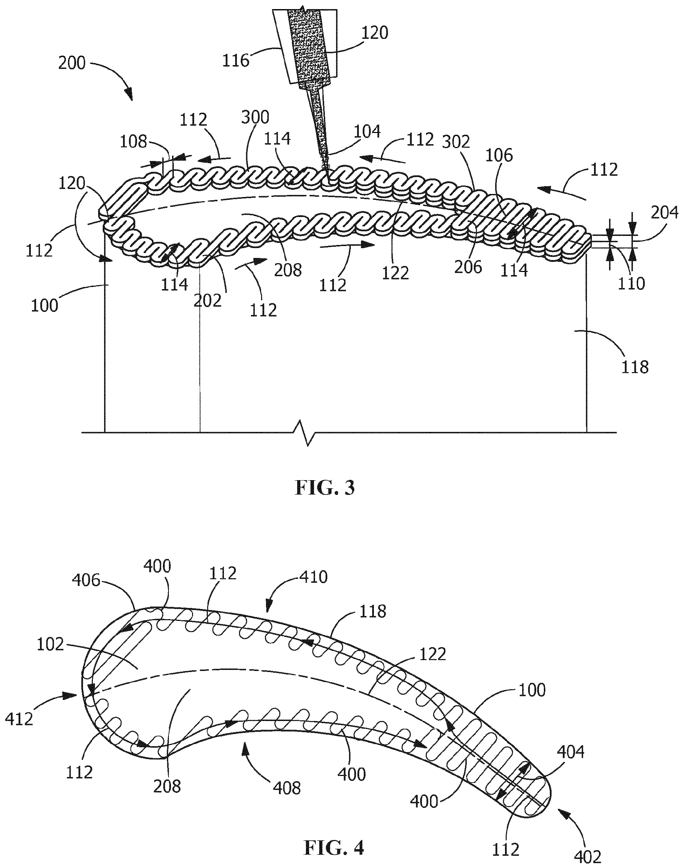

Referring again to FIGS. 4 and 6, in one embodiment, the weld path 400 commences at a trailing edge 402 of the turbine bucket 118, proceeds across a trailing edge width 404 of the trailing edge 402, and then proceeds around a periphery 406 of the turbine bucket 118 along one of a suction side 408 and a pressure side 410, through a leading edge 412, and back along the other of the suction side 408 and the pressure side 410 until returning to the trailing edge 402.

Referring to FIGS. 1, 2, 5, and 7, in one embodiment, forming the cladding layer 202 consists essentially of applying a single layer of the metal alloy 120, and the cladding layer thickness 204 is about the weld bead height 110. As used herein, "consisting essentially of" indicates that the cladding layer 202 itself is formed of the single layer of the metal alloy 120, but allows that additional and compositionally distinct coatings may be applied to the cladding layer 202, and that finishing techniques may be applied to the cladding layer 202, including, but not limited to, machining the cladding layer 202 to achieve net shape, which may reduce the cladding layer thickness 204.

The cladding layer thickness 204 may be any suitable thickness, including, but not limited to between about 0.5mm (0.02 inches) to about 4mm (0.15 inches), alternatively between about 1mm (0.04 inches) to about 3mm (0.13 inches), alternatively between about 2mm (0.07 inches) to about 2.5mm (0.1 inches), alternatively between about 0.5mm (0.02 inches) to about 13mm (0.5 inches), alternatively between about 1.0mm (0.04 inches) to about 1.8mm (0.07 inches), alternatively between about 1.5mm (0.06 inches) to about 2mm (0.09 inches), alternatively between about 2mm (0.08 inches) to about 3mm (0.11 inches), alternatively between about 2.5 (0.1 inches) to about 3mm (0.13 inches), alternatively between about 3 mm (0.12 inches) to about 3.81mm (0.15 inches).

Referring to FIGS. 1-3 and 8, in another embodiment, forming the cladding layer 202 includes applying a first layer 300 of the metal alloy 120 to the surface 102 of the substrate 100 by laser welding the powder 104 of the metal alloy 120 to the surface 102 of the substrate 100, and then applying a second layer 302 of the metal alloy 120 to the first layer 300 of the metal alloy 120 by laser welding the powder 104 of the metal alloy 120 to the first layer 300 of the metal alloy 120, such that the cladding layer thickness 204 is greater than the weld bead height 110.

Forming the cladding layer 202 may further include applying at least one additional layer (not shown) of the metal alloy 120 sequentially by laser welding the powder 104 of the metal alloy 120 to a previously applied layer of the metal alloy 120.

Forming the cladding layer 202 by applying at least a first layer 300 and a second layer 302 of the metal alloy 120 may form a cladding layer thickness 204 greater than the maximum weld bead height 110 of a weld bead 106. In one embodiment, the cladding layer thickness 204 is at least about 5mm (0.2 inches), alternatively at least about 8mm (0.3 inches), alternatively at least about 10mm (0.4 inches), alternatively at least about 13mm (0.5 inches), alternatively at least about 15mm (0.6 inches), alternatively at least about 18mm (0.7 inches), alternatively at least about 20mm (0.8 inches), alternatively at least about 23mm (0.9 inches), alternatively at least about 25mm (1 inch), alternatively between about 5mm (0.2 inches) to about 20mm (0.8 inches), alternatively between about 8mm (0.3 inches) to about 18mm (0.7 inches), alternatively between about 5mm (0.2 inches) to about 10mm (0.4 inches), alternatively between about 8mm (0.3 inches) to about 13mm (0.5 inches), alternatively between about 10mm (0.4 inches) to about 15mm (0.6 inches), alternatively between about 13mm (0.5 inches) to about 18mm (0.7 inches), alternatively between about 15mm (0.6 inches) to about 20mm (0.8 inches).

While the invention has been described with reference to a preferred embodiment, it will be understood by those skilled in the art that various changes may be made and equivalents may be substituted for elements thereof without departing from the scope of the invention as defined by the appended claims. In addition, many modifications may be made to adapt a particular situation or material to the teachings of the invention without departing from the essential scope of the appended claims. Therefore, it is intended that the invention not be limited to the particular embodiment disclosed as the best mode contemplated for carrying out this invention, but that the invention will include all embodiments falling within the scope of the appended claims.

## Claims

1. A method for forming an article (200), wherein the article (200) is a turbine bucket (118) including a squealer tip (206), the method comprising:
laser welding a powder (104) of a metal alloy (120) to a surface (102) of a substrate (100) along a weld path (400), forming a weld bead (106) of the metal alloy (120) having a weld bead width (108) and a weld bead height (108); and
propagating the weld path (400) along a weld direction (112), forming a cladding layer (202) of the metal alloy (120) disposed on the surface (102) having a cladding layer thickness (204), wherein:
the weld path (400) oscillates relative to a reference line (122), establishing a cladding width (114) wider than the weld bead width (108);
the weld bead (106) contacts itself along each oscillation such that the cladding layer (202) is continuous, and
the cladding layer (202) forms at least a portion of the squealer tip (206), **characterized in that**
the metal alloy (120) is a hard-to-weld (HTW) alloy;
the laser welding includes a laser energy density of at least 11 kJ/cm²;
laser welding the powder (104) of the metal alloy (120) to the surface (102) of the substrate (100) along the weld path (400) includes a welding speed between 130 to 500 mm per minute (5 ipm to 20 ipm);
the weld path oscillates essentially nonparallel relative to a reference line (122);
wherein the weld path (400) propagates along a weld direction (112) and commences at a trailing edge (402) of the turbine bucket (118), proceeds across a trailing edge width (404) of the trailing edge (402), and then proceeds around a periphery (406) of the turbine bucket (118) along one of a suction side (408) and a pressure side (410), through a leading edge (412), and back along the other of the suction side (408) and the pressure side (410) until returning to the trailing edge (402), and
wherein the reference line (122) is selected from the group consisting of the weld direction (112), a center line, a chord line, and combinations thereof.

2. The method of any preceding claim, wherein the metal alloy (104) includes, by weight:
15% to 17% chromium;
4% to 5% aluminum;
2% to 4% iron;
0.002% to 0.04% yttrium;
up to 0.5% manganese;
up to 0.2% silicon;
up to 0.1% zirconium;
up to 0.05% carbon;
up to 0.5% tungsten;
up to 2% cobalt;
up to 0.15% niobium;
up to 0.5% titanium;
up to 0.5% molybdenum;
up to 0.01% boron; and
a balance of nickel;

3. The method of any preceding claim, wherein the surface (102) of the substrate (100) includes a surface layer (700) of a surface material (702) selected from the group consisting of:
an alloy composition including, by weight:
21% to 23% chromium;
13% to 15% tungsten;
1% to 3% molybdenum;
0.25% to 0.75% manganese;
0.2% to 0.6% silicon;
0.1% to 0.5% aluminum;
0.05% to 0.15% carbon;
0.01% to 0.03% lanthanum;
up to 3% iron;
up to 5% cobalt;
up to 0.5% niobium;
up to 0.1% titanium;
up to 0.015% boron; and
a balance of nickel;
an alloy composition including, by weight:
20% to 23% chromium;
8% to 10% molybdenum;
3.15% to 4.15% niobium and tantalum;
up to 5% iron;
up to 0.1% carbon;
up to 0.5% manganese;
up to 0.5% silicon;
up to 0.015% phosphorous;
up to 0.015% sulfur;
up to 0.4% aluminum;
up to 0.4% titanium;
up to 1% cobalt; and
a balance of nickel;
an alloy composition including, by weight:
14% to 16% nickel;
19% to 21% chromium;
8% to 10% tungsten;
4.0% to 4.8% aluminum;
0.1% to 0.3% titanium;
2% to 4% tantalum;
0.25% to 0.45% carbon;
0.5% to 1.5% hafnium;
0.35% to 0.55% yttrium; and
a balance of cobalt; and
combinations thereof.

4. The method of any preceding claim, wherein the substrate (100) includes a material composition (704), the surface (102) of the substrate (100) consists essentially of the material composition (704) of the substrate (100), and the powder (104) of the metal alloy (120) is laser welded directly to the surface (102) of the substrate (100).

5. The method of any preceding claim, wherein the substrate (100) includes a material composition (704) selected from the group consisting of:
steels;
mild steels;
superalloys;
nickel-based superalloys;
cobalt-based superalloys;
an alloy composition including, by weight:
9% to 10.5% chromium;
7% to 8% cobalt;
3.7% to 4.7% aluminum;
3% to 4% titanium;
1% to 2% molybdenum;
5% to 7% tungsten;
4.3% to 5.3% tantalum;
0.3% to 0.7% niobium;
0.1% to 0.2% hafnium; and
a balance of nickel;
an alloy composition including, by weight:
13.5% to 14.5% chromium;
9% to 10% cobalt;
3.3% to 4.3% tungsten;
4.4% to 5.4% titanium;
2.5% to 3.5% aluminum;
0.05% to 0.15% iron;
2.3% to 3.3% tantalum;
1.1% to 2.1% molybdenum;
0.05% to 0.15% carbon; and
a balance of nickel;
an alloy composition including, by weight:
22.5% to 24.5% chromium;
18% to 20% cobalt;
1.5% to 2.5% tungsten;
0.3% to 1.3% niobium;
1.8% to 2.8% titanium;
0.7% to 1.7% aluminum;
0.5% to 1.5% tantalum;
0.15% to 0.35% silicon;
0.05% to 0.15% manganese; and
a balance of nickel;
an alloy composition including, by weight:
17% to 21% chromium;
50% to 55% nickel and cobalt;
4.75% to 5.5% niobium and tantalum;
2.8% to 3.3% molybdenum;
0.65% to 1.15% titanium;
0.2% to 0.8% aluminum;
up to 1% cobalt;
up to 0.08% carbon;
up to 0.35% manganese;
up to 0.35% silicon;
up to 0.015% phosphorous;
up to 0.015% sulfur;
up to 0.006% boron;
up to 0.3% copper; and
a balance of iron;
an alloy composition including, by weight:
5.4% to 5.7% aluminum;
8% to 8.5% chromium;
9% to 9.5% cobalt;
9.3% to 9.7% tungsten;
0.05% to 0.15% manganese;
0.15% to 0.35% silicon;
0.06% to 0.09% carbon; and
a balance of nickel;
an alloy composition including, by weight:
7% to 8% cobalt;
6% to 8% chromium;
5.5% to 7.5% tantalum;
5.2% to 7.2% aluminum;
4% to 6% tungsten;
2.5% to 3.5% rhenium;
1% to 2% molybdenum;
0.1% to 0.2% hafnium; and
a balance of nickel;
an alloy composition including, by weight:
7.9% to 8.9% chromium;
9% to 10% cobalt;
5% to 6% aluminum;
0.5% to 0.9% titanium;
9% to 10% tungsten;
0.3% to 0.7% molybdenum;
2.5% to 3.5% tantalum;
1% to 2% hafnium; and
a balance of nickel; and
combinations thereof.

6. The method of any preceding claim, wherein the laser energy density is between 11.5 kJ/cm² to 20.3 kJ/cm².

7. The method of any preceding claim, wherein the powder (104) is applied at a flow rate between 4 g/min to 6 g/min.

8. The method of any preceding claim, wherein forming the cladding layer (202) consists essentially of applying a single layer of the metal alloy (120), and the cladding layer thickness (204) is the weld bead height (110).

9. The method of any preceding claim, wherein forming the cladding layer (202) includes applying a first layer (300) of the metal alloy (120) to the surface (102) of the substrate (100) by laser welding the powder (104) of the metal alloy (120) to the surface (102) of the substrate (100), and then applying a second layer (302) of the metal alloy (120) to the first layer (300) of the metal alloy (120) by laser welding the powder (104) of the metal alloy (120) to the first layer (300) of the metal alloy (120), such that the cladding layer thickness (204) is greater than the weld bead height (110).

10. The method of any preceding claim, wherein the cladding layer thickness (204) is between 0.5mm (0.02 inches) to 4mm (0.15 inches).

11. The method of any of claims 1 to 9, wherein the cladding layer thickness (204) is at least 5mm (0.2 inches).

## Patentansprüche

1. Verfahren zum Ausbilden eines Gegenstands (200), wobei der Gegenstand (200) eine Turbinenschaufel (118) ist, die eine Reibspitze (206) einschließt, das Verfahren umfassend:
Laserschweißen eines Pulvers (104) einer Metalllegierung (120) an eine Oberfläche (102) eines Substrats (100) entlang eines Schweißpfads (400), wobei eine Schweißraupe (106) der Metalllegierung (120) ausgebildet wird, die eine Schweißraupenbreite (108) und eine Schweißraupenhöhe (108) aufweist; und
Ausbreiten des Schweißpfads (400) entlang einer Schweißrichtung (112), wobei eine Plattierungsschicht (202) der Metalllegierung (120) ausgebildet wird, die auf der Oberfläche (102) angeordnet ist, die eine Plattierungsschichtdicke (204) aufweist, wobei:
der Schweißpfad (400) relativ zu einer Referenzlinie (122) oszilliert, wobei eine Plattierungsbreite (114) erstellt wird, die breiter als die Schweißraupenbreite (108) ist;
die Schweißraupe (106) sich selbst entlang jeder Oszillation derart berührt, dass die Plattierungsschicht (202) kontinuierlich ist, und
die Plattierungsschicht (202) mindestens einen Abschnitt der Reibspitze (206) ausbildet, **dadurch gekennzeichnet, dass**
die Metalllegierung (120) eine schwer schweißbare (HTW) Legierung ist;
das Laserschweißen eine Laserenergiedichte von mindestens 11 kJ/cm² einschließt;
das Laserschweißen des Pulvers (104) der Metalllegierung (120) an die Oberfläche (102) des Substrats (100) entlang des Schweißpfads (400) eine Schweißgeschwindigkeit zwischen 130 und 500 mm pro Minute (5 ipm bis 20 ipm) einschließt;
der Schweißpfad im Wesentlichen nicht parallel zu einer Referenzlinie (122) oszilliert;
wobei sich der Schweißpfad (400) entlang einer Schweißrichtung (112) ausbreitet und an einer Hinterkante (402) der Turbinenschaufel (118) beginnt, über eine Hinterkantenbreite (404) der Hinterkante (402) verläuft und dann um einen Umfang (406) der Turbinenschaufel (118) entlang einer von einer Saugseite (408) und einer Druckseite (410), durch eine Vorderkante (412) und zurück entlang der anderen der Saugseite (408) und der Druckseite (410) verläuft, bis er zu der Hinterkante (402) zurückkehrt, und
wobei die Referenzlinie (122) aus der Gruppe ausgewählt ist, bestehend aus der Schweißrichtung (112), einer Mittellinie, einer Sehnenlinie und Kombinationen davon.

2. Verfahren nach einem der vorstehenden Ansprüche, wobei die Metalllegierung (104) nach Gewicht einschließt:
15 % bis 17 % Chrom;
4 % bis 5 % Aluminium;
2 % bis 4 % Eisen;
0,002 % bis 0,04 % Yttrium;
bis zu 0,5 % Mangan;
bis zu 0,2 % Silizium;
bis zu 0,1 % Zirkonium;
bis zu 0,05 % Kohlenstoff;
bis zu 0,5 % Wolfram;
bis zu 2 % Kobalt;
bis zu 0,15 % Niob;
bis zu 0,5 % Titan;
bis zu 0,5 % Molybdän;
bis zu 0,01 % Bor; und
einen Rest Nickel;

3. Verfahren nach einem der vorstehenden Ansprüche, wobei die Oberfläche (102) des Substrats (100) eine Oberflächenschicht (700) eines Oberflächenmaterials (702) einschließt, das aus der Gruppe ausgewählt ist, bestehend aus:
einer Legierungszusammensetzung, die nach Gewicht einschließt:
21 % bis 23 % Chrom;
13 % bis 15 % Wolfram;
1 % bis 3 % Molybdän;
0,25 % bis 0,75 % Mangan;
0,2 % bis 0,6 % Silizium;
0,1 % bis 0,5 % Aluminium;
0,05 % bis 0,15 % Kohlenstoff;
0,01 % bis 0,03 % Lanthan;
bis zu 3 % Eisen;
bis zu 5 % Kobalt;
bis zu 0,5 % Niob;
bis zu 0,1 % Titan;
bis zu 0,015 % Bor; und
einen Rest Nickel;
einer Legierungszusammensetzung, die nach Gewicht einschließt:
20 % bis 23 % Chrom;
8 % bis 10 % Molybdän;
3,15 % bis 4,15 % Niob und Tantal;
bis zu 5 % Eisen;
bis zu 0,1 % Kohlenstoff;
bis zu 0,5 % Mangan;
bis zu 0,5 % Silizium;
bis zu 0,015 % Phosphor;
bis zu 0,015 % Schwefel;
bis zu 0,4 % Aluminium;
bis zu 0,4 % Titan;
bis zu 1 % Kobalt; und
einen Rest Nickel;
einer Legierungszusammensetzung, die nach Gewicht einschließt:
14 % bis 16 % Nickel;
19 % bis 21 % Chrom;
8 % bis 10 % Wolfram;
4,0 % bis 4,8 % Aluminium;
0,1 % bis 0,3 % Titan;
2 % bis 4 % Tantal;
0,25 % bis 0,45 % Kohlenstoff;
0,5 % bis 1,5 % Hafnium;
0,35 % bis 0,55 % Yttrium; und
einen Rest Kobalt; und
Kombinationen davon.

4. Verfahren nach einem der vorstehenden Ansprüche, wobei das Substrat (100) eine Materialzusammensetzung (704) einschließt, die Oberfläche (102) des Substrats (100) im Wesentlichen aus der Materialzusammensetzung (704) des Substrats (100) besteht und das Pulver (104) der Metalllegierung (120) direkt auf die Oberfläche (102) des Substrats (100) lasergeschweißt wird.

5. Verfahren nach einem vorstehenden Anspruch, wobei das Substrat (100) mindestens eine Materialzusammensetzung (704) einschließt, die aus der Gruppe ausgewählt ist, bestehend aus:
Stählen;
Weichstählen;
Superlegierungen;
Superlegierungen auf Nickelbasis;
Superlegierungen auf Kobaltbasis;
einer Legierungszusammensetzung, die nach Gewicht einschließt:
9 % bis 10,5 % Chrom;
7 % bis 8 % Kobalt;
3,7 % bis 4,7 % Aluminium;
3 % bis 4 % Titan;
1 % bis 2 % Molybdän;
5 % bis 7 % Wolfram;
4,3 % bis 5,3 % Tantal;
0,3 % bis 0,7 % Niob;
0,1 % bis 0,2 % Hafnium; und
einen Rest Nickel;
einer Legierungszusammensetzung, die nach Gewicht einschließt:
13,5 % bis 14,5 % Chrom;
9 % bis 10 % Kobalt;
3,3 % bis 4,3 % Wolfram;
4,4 % bis 5,4 % Titan;
2,5 % bis 3,5 % Aluminium;
0,05 % bis 0,15 % Eisen;
2,3 % bis 3,3 % Tantal;
1,1 % bis 2,1 % Molybdän;
0,05 % bis 0,15 % Kohlenstoff; und
einen Rest Nickel;
einer Legierungszusammensetzung, die nach Gewicht einschließt:
22,5 % bis 24,5 % Chrom;
18 % bis 20 % Kobalt;
1,5 % bis 2,5 % Wolfram;
0,3 % bis 1,3 % Niob;
1,8 % bis 2,8 % Titan;
0,7 % bis 1,7 % Aluminium;
0,5 % bis 1,5 % Tantal;
0,15 % bis 0,35 % Silizium;
0,05 % bis 0,15 % Mangan; und
einen Rest Nickel;
einer Legierungszusammensetzung, die nach Gewicht einschließt:
17 % bis 21 % Chrom;
50 % bis 55 % Nickel und Kobalt;
4,75 % bis 5,5 % Niob und Tantal;
2,8 % bis 3,3 % Molybdän;
0,65 % bis 1,15 % Titan;
0,2 % bis 0,8 % Aluminium;
bis zu 1 % Kobalt;
bis zu 0,08 % Kohlenstoff;
bis zu 0,35 % Mangan;
bis zu 0,35 % Silizium;
bis zu 0,015 % Phosphor;
bis zu 0,015 % Schwefel;
bis zu 0,006 % Bor;
bis zu 0,3 % Kupfer; und
einen Rest Eisen;
einer Legierungszusammensetzung, die nach Gewicht einschließt:
5,4 % bis 5,7 % Aluminium;
8 % bis 8,5 % Chrom;
9 % bis 9,5 % Kobalt;
9,3 % bis 9,7 % Wolfram;
0,05 % bis 0,15 % Mangan;
0,15 % bis 0,35 % Silizium;
0,06 % bis 0,09 % Kohlenstoff; und
einen Rest Nickel;
einer Legierungszusammensetzung, die nach Gewicht einschließt:
7 % bis 8 % Kobalt;
6 % bis 8 % Chrom;
5,5 % bis 7,5 % Tantal;
5,2 % bis 7,2 % Aluminium;
4 % bis 6 % Wolfram;
2,5 % bis 3,5 % Rhenium;
1 % bis 2 % Molybdän;
0,1 % bis 0,2 % Hafnium; und
einen Rest Nickel;
einer Legierungszusammensetzung, die nach Gewicht einschließt:
7,9 % bis 8,9 % Chrom;
9 % bis 10 % Kobalt;
5 % bis 6 % Aluminium;
0,5 % bis 0,9 % Titan;
9 % bis 10 % Wolfram;
0,3 % bis 0,7 % Molybdän;
2,5 % bis 3,5 % Tantal;
1 % bis 2 % Hafnium; und
einen Rest Nickel; und
Kombinationen davon.

6. Verfahren nach einem der vorstehenden Ansprüche, wobei die Laserenergiedichte zwischen 11,5 kJ/cm² und 20,3 kJ/cm² liegt.

7. Verfahren nach einem der vorstehenden Ansprüche, wobei das Pulver (104) mit einer Fließgeschwindigkeit zwischen 4 g/min und 6 g/min aufgetragen wird.

8. Verfahren nach einem der vorstehenden Ansprüche, wobei das Ausbilden der Plattierungsschicht (202) im Wesentlichen aus dem Aufbringen einer einzelnen Schicht der Metalllegierung (120) besteht und die Plattierungsschichtdicke (204) die Schweißraupenhöhe (110) ist.

9. Verfahren nach einem der vorstehenden Ansprüche, wobei das Ausbilden der Plattierungsschicht (202) das Aufbringen einer ersten Schicht (300) der Metalllegierung (120) auf die Oberfläche (102) des Substrats (100) durch Laserschweißen des Pulvers (104) der Metalllegierung (120) auf die Oberfläche (102) des Substrats (100) und dann das Aufbringen einer zweiten Schicht (302) der Metalllegierung (120) auf die erste Schicht (300) der Metalllegierung (120) durch Laserschweißen des Pulvers (104) der Metalllegierung (120) auf die erste Schicht (300) der Metalllegierung (120) derart einschließt, dass die Plattierungsschichtdicke (204) größer als die Schweißraupenhöhe (110) ist.

10. Verfahren nach einem der vorstehenden Ansprüche, wobei die Plattierungsschichtdicke (204) zwischen 0,5 mm (0,02 Zoll) und 4 mm (0,15 Zoll) liegt.

11. Verfahren nach einem der Ansprüche 1 bis 9, wobei die Plattierungsschichtdicke (204) mindestens 5 mm (0,2 Zoll) beträgt.

## Revendications

1. Procédé de formation d'un article (200), dans lequel l'article (200) est une aube de turbine (118) comportant un bout aminci (206), le procédé comprenant :
le soudage laser d'une poudre (104) d'un alliage métallique (120) à une surface (102) d'un substrat (100) le long d'une trajectoire de soudure (400), la formation d'un cordon de soudure (106) de l'alliage métallique (120) ayant une largeur de cordon de soudure (108) et une hauteur de cordon de soudure (108) ; et
la propagation de la trajectoire de soudure (400) le long d'une direction de soudure (112), la formation d'une couche de revêtement (202) de l'alliage métallique (120) disposée sur la surface (102) ayant une épaisseur de couche de revêtement (204), dans lequel :
la trajectoire de soudure (400) oscille par rapport à une ligne de référence (122), établissant une largeur de revêtement (114) plus grande que la largeur de cordon de soudure (108) ;
le cordon de soudure (106) se met en contact avec lui-même le long de chaque oscillation, de sorte que la couche de revêtement (202) est continue, et
la couche de revêtement (202) forme au moins une partie du bout aminci (206), **caractérisé en ce que**
l'alliage métallique (120) est un alliage difficile à souder (HTW) ;
le soudage laser comporte une densité d'énergie laser d'au moins 11 kJ/cm² ;
le soudage laser de la poudre (104) de l'alliage métallique (120) à la surface (102) du substrat (100) le long de la trajectoire de soudure (400) comporte une vitesse de soudage comprise entre 130 et 500 mm par minute (5 ppm à 20 ppm) ;
la trajectoire de soudure oscille essentiellement de manière non parallèle par rapport à une ligne de référence (122) ;
dans lequel la trajectoire de soudure (400) se propage le long d'une direction de soudure (112) et commence au niveau d'un bord de fuite (402) de l'aube de turbine (118), se déplace à travers une largeur de bord de fuite (404) du bord de fuite (402), puis se déplace autour d'une périphérie (406) de l'aube de turbine (118) le long de l'un parmi un côté d'aspiration (408) et un côté de pression (410), à travers un bord d'attaque (412), et revient le long de l'autre parmi le côté d'aspiration (408) et le côté de pression (410) jusqu'à revenir au bord de fuite (402), et
dans lequel la ligne de référence (122) est sélectionnée dans le groupe constitué de la direction de soudure (112), d'une ligne médiane, d'une ligne de corde et des combinaisons de celles-ci.

2. Procédé selon l'une quelconque revendication précédente, dans lequel l'alliage métallique (104) comporte, en poids :
15 % à 17 % de chrome ;
4 % à 5 % d'aluminium ;
2 % à 4 % de fer ;
0,002 % à 0,04 % d'yttrium ;
jusqu'à 0,5 % de manganèse ;
jusqu'à 0,2 % de silicium ;
jusqu'à 0,1 % de zirconium ;
jusqu'à 0,05 % de carbone ;
jusqu'à 0,5 % de tungstène ;
jusqu'à 2 % de cobalt ;
jusqu'à 0,15 % de niobium ;
jusqu'à 0,5 % de titane ;
jusqu'à 0,5 % de molybdène ;
jusqu'à 0,01 % de bore ; et
un reste de nickel.

3. Procédé selon l'une quelconque revendication précédente, dans lequel la surface (102) du substrat (100) comporte une couche de surface (700) d'un matériau de surface (702) sélectionné dans le groupe constitué de :
une composition d'alliage comportant, en poids :
21 % à 23 % de chrome ;
13 % à 15 % de tungstène ;
1 % à 3 % de molybdène ;
0,25 % à 0,75 % de manganèse ;
0,2 % à 0,6 % de silicium ;
0,1 % à 0,5 % d'aluminium ;
0,05 % à 0,15 % de carbone ;
0,01 % à 0,03 % de lanthane ;
jusqu'à 3 % de fer ;
jusqu'à 5 % de cobalt ;
jusqu'à 0,5 % de niobium ;
jusqu'à 0,1 % de titane ;
jusqu'à 0,015 % de bore ; et
un reste de nickel ;
une composition d'alliage comportant, en poids :
20 % à 23 % de chrome ;
8 % à 10 % de molybdène ;
3,15 % à 4,15 % de niobium et de tantale ;
jusqu'à 5 % de fer ;
jusqu'à 0,1 % de carbone ;
jusqu'à 0,5 % de manganèse ;
jusqu'à 0,5 % de silicium ;
jusqu'à 0,015 % de phosphore ;
jusqu'à 0,015 % de soufre ;
jusqu'à 0,4 % d'aluminium
jusqu'à 0,4 % de titane ;
jusqu'à 1 % de cobalt ; et
un reste de nickel ;
une composition d'alliage comportant, en poids :
14 % à 16 % de nickel;
19 % à 21 % de chrome ;
8 % à 10 % de tungstène ;
4,0 % à 4,8 % d'aluminium ;
0,1 % à 0,3 % de titane ;
2 % à 4 % de tantale ;
0,25 % à 0,45 % de carbone ;
0,5 % à 1,5 % d'hafnium ;
0,35 % à 0,55 % d'yttrium ; et
un reste de cobalt ; et
leurs combinaisons.

4. Procédé selon l'une quelconque revendication précédente, dans lequel le substrat (100) comporte une composition de matériau (704), la surface (102) du substrat (100) est essentiellement constituée de la composition de matériau (704) du substrat (100), et la poudre (104) de l'alliage métallique (120) est soudée au laser directement à la surface (102) du substrat (100).

5. Procédé selon l'une quelconque revendication précédente, dans lequel le substrat (100) comporte une composition de matériau (704) sélectionnée dans le groupe constitué de :
aciers ;
aciers doux ;
superalliages ;
superalliages à base de nickel ;
superalliages à base de cobalt ;
une composition d'alliage comportant, en poids :
9 % à 10,5 % de chrome ;
7 % à 8 % de cobalt ;
3,7 % à 4,7 % d'aluminium ;
3 % à 4 % de titane ;
1 % à 2 % de molybdène ;
5 % à 7 % de tungstène ;
4,3 % à 5,3 % de tantale ;
0,3 % à 0,7 % de niobium ;
0,1 % à 0,2 % d'hafnium ; et
un reste de nickel ;
une composition d'alliage comportant, en poids :
13,5 % à 14,5 % de chrome ;
9 % à 10 % de cobalt ;
3,3 % à 4,3 % de tungstène ;
4,4 % à 5,4 % de titane ;
2,5 % à 3,5 % d'aluminium ;
0,05 % à 0,15 % de fer ;
2,3 % à 3,3 % de tantale ;
1,1 % à 2,1 % de molybdène ;
0,05 % à 0,15 % de carbone ; et
un reste de nickel ;
une composition d'alliage comportant, en poids :
22,5 % à 24,5 % de chrome ;
18 % à 20 % de cobalt ;
1,5 % à 2,5 % de tungstène ;
0,3 % à 1,3 % de niobium ;
1,8 % à 2,8 % de titane ;
0,7 % à 1,7 % d'aluminium ;
0,5 % à 1,5 % de tantale ;
0,15 % à 0,35 % de silicium ;
0,05 % à 0,15 % de manganèse ; et
un reste de nickel ;
une composition d'alliage comportant, en poids :
17 % à 21 % de chrome ;
50 % à 55 % de nickel et de cobalt ;
4,75 % à 5,5 % de niobium et de tantale ;
2,8 % à 3,3 % de molybdène ;
0,65 % à 1,15 % de titane ;
0,2 % à 0,8 % d'aluminium ;
jusqu'à 1 % de cobalt ;
jusqu'à 0,08 % de carbone ;
jusqu'à 0,35 % de manganèse ;
jusqu'à 0,35 % de silicium ;
jusqu'à 0,015 % de phosphore ;
jusqu'à 0,015 % de soufre ;
jusqu'à 0,006 % de bore ;
jusqu'à 0,3 % de cuivre ; et
un reste de fer ;
une composition d'alliage comportant, en poids :
5,4 % à 5,7 % d'aluminium ;
8 % à 8,5 % de chrome ;
9 % à 9,5 % de cobalt ;
9,3 % à 9,7 % de tungstène ;
0,05 % à 0,15 % de manganèse ;
0,15 % à 0,35 % de silicium ;
0,06 % à 0,09 % de carbone ; et
un reste de nickel ;
une composition d'alliage comportant, en poids :
7 % à 8 % de cobalt ;
6 % à 8 % de chrome ;
5,5 % à 7,5 % de tantale ;
5,2 % à 7,2 % d'aluminium ;
4 % à 6 % de tungstène ;
2,5 % à 3,5 % de rhénium ;
1 % à 2 % de molybdène ;
0,1 % à 0,2 % d'hafnium ; et
un reste de nickel ;
une composition d'alliage comportant, en poids :
7,9 % à 8,9 % de chrome ;
9 % à 10 % de cobalt ;
5 % à 6 % d'aluminium ;
0,5 % à 0,9 % de titane ;
9 % à 10 % de tungstène ;
0,3 % à 0,7 % de molybdène ;
2,5 % à 3,5 % de tantale ;
1 % à 2 % d'hafnium ; et
un reste de nickel ; et
leurs combinaisons.

6. Procédé selon l'une quelconque revendication précédente, dans lequel la densité d'énergie laser est comprise entre 11,5 kJ/cm² et 20,3 kJ/cm².

7. Procédé selon l'une quelconque revendication précédente, dans lequel la poudre (104) est appliquée à un débit compris entre 4 g/min et 6 g/min.

8. Procédé selon l'une quelconque revendication précédente, dans lequel la formation de la couche de revêtement (202) consiste essentiellement à appliquer une seule couche de l'alliage métallique (120), et l'épaisseur de couche de revêtement (204) est la hauteur de cordon de soudure (110).

9. Procédé selon l'une quelconque revendication précédente, dans lequel la formation de la couche de revêtement (202) comporte l'application d'une première couche (300) de l'alliage métallique (120) à la surface (102) du substrat (100) par soudage laser de la poudre (104) de l'alliage métallique (120) à la surface (102) du substrat (100), puis l'application d'une seconde couche (302) de l'alliage métallique (120) à la première couche (300) de l'alliage métallique (120) par soudage laser de la poudre (104) de l'alliage métallique (120) à la première couche (300) de l'alliage métallique (120), de telle sorte que l'épaisseur de couche de revêtement (204) soit supérieure à la hauteur de cordon de soudure (110).

10. Procédé selon l'une quelconque revendication précédente, dans lequel l'épaisseur de couche de revêtement (204) est comprise entre 0,5 mm (0,02 pouce) et 4 mm (0,15 pouce).

11. Procédé selon l'une quelconque des revendications 1 à 9, dans lequel l'épaisseur de couche de revêtement (204) est d'au moins 5 mm (0,2 pouce).
